# EUROPEAN PATENT SPECIFICATION

(11) **EP 2 715 198 B1**
(45) Date of publication and mention of the grant of the patent: **08.07.2015**
(21) Application number: 12731755.0
(22) Date of filing: 24.05.2012
(51) Int. Cl.: F16L 1/18

(54) **PIPE-LAYING SYSTEM FOR LAYING PIPES IN WATER, VESSEL PROVIDED THEREWITH AND METHOD THEREFOR**
SYSTEM ZUM VERLEGEN VON ROHREN IN WASSER, DAMIT AUSGERÜSTETES WASSERFAHRZEUG UND VERFAHREN DAFÜR
SYSTÈME DE POSE DE CANALISATIONS POUR POSER DES CANALISATIONS DANS L'EAU, BÂTIMENT ÉQUIPÉ D'UN TEL SYSTÈME ET PROCÉDÉ CORRESPONDANT

(30) Priority: 24.05.2011 NL 2006839
(43) Date of publication of application: 09.04.2014
(73) Proprietor: U-Sea Beheer B.V., 9206 AX Drachten (NL)
(72) Inventor: HESSELS, Hendrik, 9206 AX Drachten (NL)
(74) Representative: Verdijck, Gerardus
(86) International application number: PCT/NL2012/050365
(87) International publication number: WO 2012/161579

(56) References cited:
- WO-A2-2009/090526
- NL-A- 6 609 577
- US-A- 3 390 532

## Description

The present invention relates to a pipe-laying system suitable for laying so-called offshore pipes. The system according to the invention relates more particularly to a so-called modular 'skidable' S-lay system.

WO 2009/090526 discloses a pipe assembly method and system for producing underwater pipelines.

Systems known in practice for laying pipes, particularly in shallow water, such as a so-called S-lay pipe-laying system, make use of tensioning means for paying out the pipe. This results in a relatively complex system in which diverse operations have to be precisely adjusted to each other in order to counter disruptive influences of wind, swell and other conditions.

The invention has for its object to provide a pipe-laying system with which existing systems are improved and preferably also simplified.

This object is achieved with the pipe-laying system for laying pipes in water according to claim 1.

Providing a clamping system, preferably comprising two clamps, on a displaceable frame such as a so-called skid, in combination with a pipe connecting system, in particular a pipe welding system, connected to the frame achieves that the different operations take place for the purpose of laying the pipes. Pipe sections are preferably first connected to each other to form one pipe element, preferably by a welded connection.

In a currently preferred embodiment pipe sections of for instance about 10 metres in length, or a different length, are mutually connected to a length of for instance about 70 metres for the purpose of subsequently paying out a pipe element, assembled from a number of pipe sections, in the direction of the water surface and seabed. The pipe-laying system according to the invention has a length here of about 80 metres. The displaceable frame is substantially movable along this length and moves along the pipe sections in order connect them to each other. This achieves that each individual pipe section need not be moved along after being connected. In the currently preferred embodiment this advancing movement therefore takes place with lengths of about 70 metres. This enables a better controllable processing of pipe sections, wherein fewer disruptions are caused. Such disruptions are for instance caused by wind and waves.

The clamping system provides for clamping of pipe sections such that the influence of disruptions on the processing of these pipe sections is prevented as far as possible. A relatively well controlled connecting process can be performed according to the invention by connecting preferably more than one pipe section, and preferably about 5 to 10 pipe sections, in one processing step using the displaceable frame. This can further guarantee the quality of the connections. This further counters the influence of disruptions.

In a currently preferred embodiment the clamping system also provides for the alignment of the pipe sections for connecting relative to each other for the purpose of the connecting process, and particularly the welding process. The clamping system is hereby utilized in effective manner and the number of components required in the pipe-laying system according to the invention remains limited.

An additional advantage of the use of the clamping system in combination with the displaceable frame is that it is possible to dispense with a tensioner system known in practice. This greatly reduces the complexity and susceptibility to disruption of existing pipe-laying systems. By preferably providing the clamping system integrally in the pipe-laying system only a limited number of contact points and/or connecting points are necessary between the pipe-laying system according to the invention and the vessel on which it can be placed. A largely modular system is hereby obtained such that the flexibility of the overall process is increased.

The invention is preferably used on a moored vessel. This achieves that the relative position is fixed relative to a freely floating/moving vessel. This further reduces the influence of said disruptions on the connecting process of the pipe-laying system.

Surprisingly, it has been found that the combination of the pipe-laying system according to the invention and application thereof on a moored vessel produces good results in practice due to the stepwise laying of pipes. The use of an anchor system for positioning the vessel in combination with the displaceable frame of the pipe-laying system as it were realizes a discontinuous or stepwise pipe-laying process, wherein a number of pipe sections are connected to the pipe and moved along as one whole in the direction of the water. This fits in well with the procedures of a vessel moored in this manner.

In an advantageous preferred embodiment according to the invention the pipe-laying system is provided with a winch system.

Providing a winch system achieves that the system is fixed to relatively great extent relative to the seabed where the pipe has to be laid. If desired, this winch system can be embodied as an existing anchor system of a vessel.

However, by adding an additional winch system on the frame, or the skid, provided with an anchor and optionally a connection to shore, the force acting on the pipe is separated from the normal anchor system of the vessel, and positioning is made easier. This achieves an effective pipe-laying system, wherein the influence of disruptions is greatly reduced.

In an advantageous preferred embodiment according to the invention the clamping system is provided with an adjustable clamping mechanism.

Providing an adjustable clamping mechanism achieves that a wide range of pipe diameters can be processed. In a currently preferred embodiment pipe sections with diameters in the range of about 60 to 120 cm are processed. The clamping mechanism is provided for this purpose with three main settings and further provided with an additional pressing element, for instance a hydraulic cylinder, for the purpose of clamping the pipe sections.

The invention also relates to a vessel provided with a pipe-laying system as described above.

Such a vessel provides the same advantages and effects as described for the pipe-laying system.

The invention further also relates to a method for laying pipes, wherein use is made of a pipe-laying system and/or vessel as described above provided therewith in accordance with claim 8.

Such a method provides the same effects and advantages as described for the pipe-laying system and/or the vessel as described above.

In a currently preferred embodiment of the invention pipe sections are supplied to a processing position, for instance on a type of roller conveyor, and placed mutually in line. The pipe sections are then connected to each other using the connecting system, for instance a welding system, provided on a displaceable frame. This displaceable frame is for instance movable over a rail provided on the vessel. The frame moves along the positioned pipe sections and forms the desired connections. The pipe sections have a length here of about 10 metres. Seven pipe sections are for instance processed at a time so that the already laid pipe is extended by about 70 metres. An inspection, a test and/or the application of a covering layer/coating can be performed prior to, simultaneously with and/or subsequently to the connecting. The connected pipe is then moved along over the added length in the direction of the water.

The above stated method is preferably performed on a moored vessel in order to counter disruptions during the connecting process. Simultaneous processing of a plurality of pipe sections further avoids disruptions during the connecting. A better controllable and manageable connecting process is hereby realized.

Further advantages, features and details of the invention are elucidated on the basis of a preferred embodiment thereof, wherein reference is made to the accompanying figures, in which:
- Figure 1 is a view of a vessel with pipe-laying system according to the invention;
- Figure 2 is a top view of the vessel of figure 1;
- Figure 3 is a view of a clamping of a pipe with the pipe-laying system of figure 1; and
- Figure 4 is a view of a further pipe-laying system according to the invention.

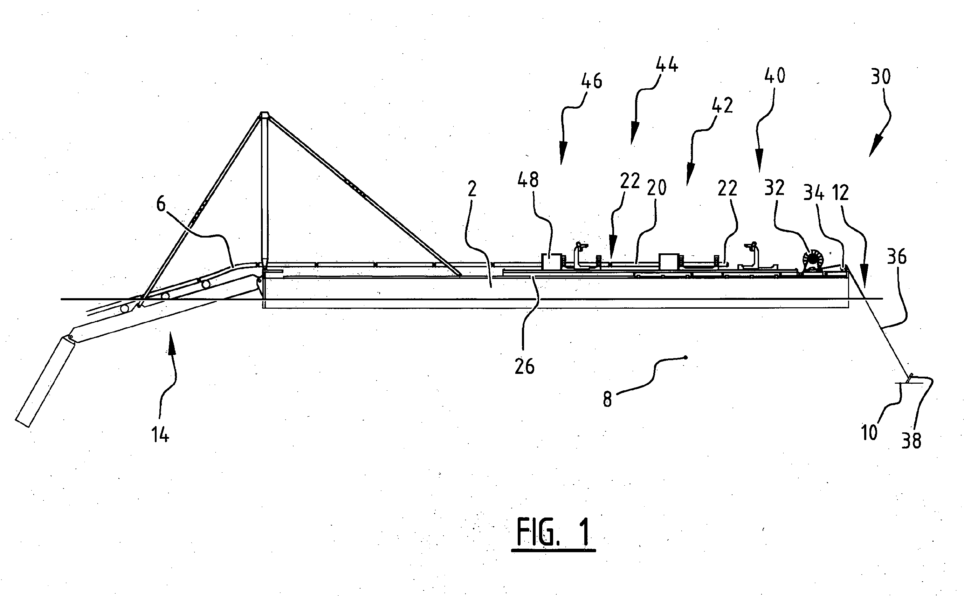

A vessel 2 (figure 1) is provided with a pipe-laying system 4 with which in the shown embodiment a pipe 6 can be placed in water 8 on seabed 10 in accordance with a so-called S-lay method. Up to the water surface 12 pipe 6 is supported by guides 14. Pipe-laying system 4 is provided with a displaceable frame 16 in which a welding device 18 is placed. Welding device 18 forms connections 20 between adjacent pipe sections 22 with which pipe 6 is formed. A number of pipe sections 22 together form a pipe element 24 which is arranged as unit or module on pipe 6 and subsequently moved along as unit or module in the direction of water surface 12. Frame 16 is displaceable over rail 26 on vessel 2. Pipe sections 22 are supported by rollers or guides 28. Via winch system 30 with drum 32 and roller 34 a cable 36 is connected to seabed 10 using anchor element 38. In the shown embodiment pipe-laying system 4 is provided with a pretreatment section 40, a welding section 42, a testing section 44 and a coating section 46 with coater 48.

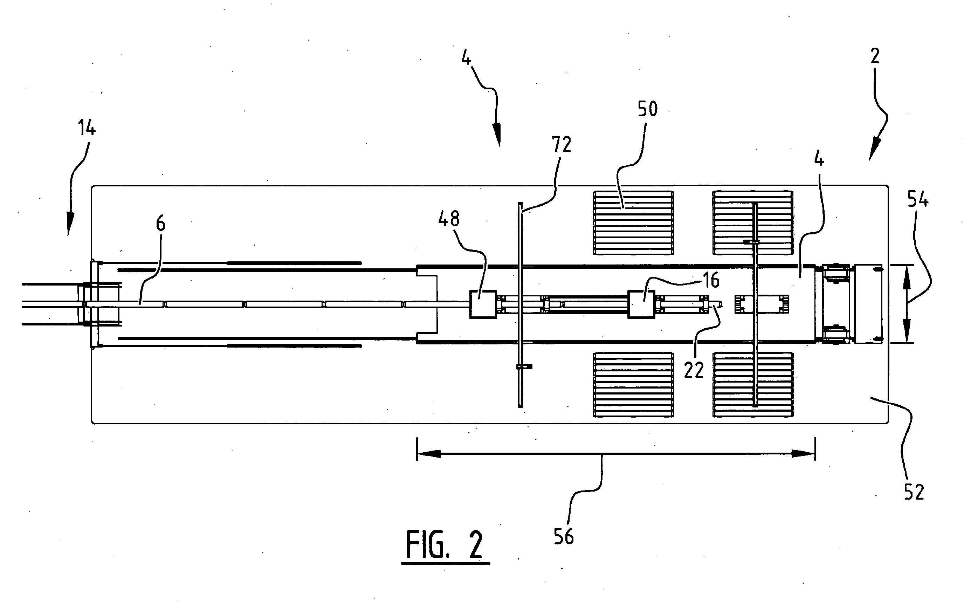

Individual pipe sections 50 (figure 2) are for instance carried from deck 52 to pipe-laying system 4. In the shown embodiment the pipe-laying system has a width 54 of about 30 metres and a length 56 of about 100 metres. This for instance makes it possible to arrange seven pipe sections 22 with a length of about 10 metres as one module 24 in order to form pipe 6. It will be apparent that other dimensions and numbers are also possible according to the invention.

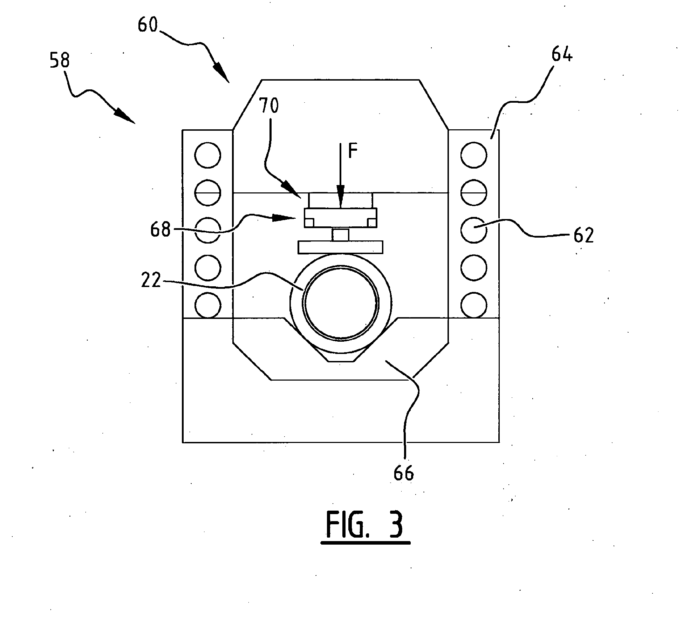

A clamping system 58 (figure 3) is provided with an adjustable clamping mechanism 60. In the shown embodiment mechanism 60 is provided with three settings 62 which are provided in supports 64. Pipe section 22 is clamped between roller conveyor 66 and pressing element 68 arranged on the upper side thereof. Element 68 is preferably provided here.with a hydraulic cylinder 70 for the purpose of exerting a pressure force F so that pipe section 22 can be clamped with the desired force for any diameter of pipe section 22 in the desired range.

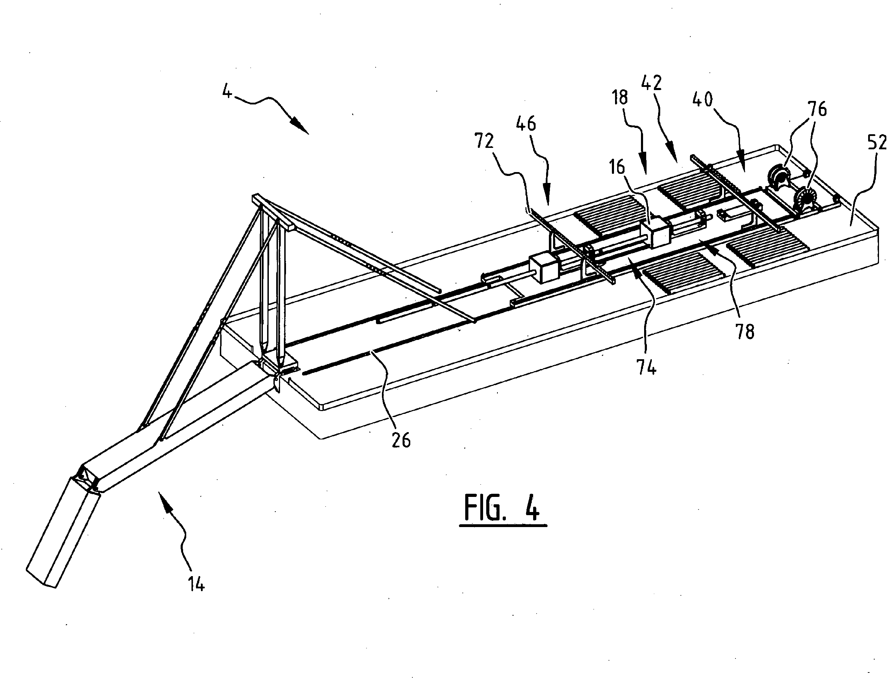

Pipe-laying system 4 (figure 4) is placed on deck 52 on which rails 26 are provided for the purpose of moving frame 16 with welding station 18. A crane 72 is also provided. In the shown embodiment clamping mechanism 74 is provided with a stroke of at least one pipe section length. Clamping mechanism 74 also serves to mutually align pipe sections 22. Winches 76 are further provided. In the embodiment of the pipe-laying system shown in figure 4 a combined coating/testing station. 78 is arranged. Supports or stinger 14 serve to support and/or guide pipe 6.

During laying of a pipe 6 on seabed 10, pipe sections 50 are carried from deck 52 to pipe-laying system 4. Pipe sections 22 are positioned herein and mutually connected via connection 20 with welding device 18 on displaceable frame 16. Pipe sections 22 are clamped with clamping device 58 during the processing. After testing and optional coating of the pipe sections 22 preferably connected to form pipe element 24, pipe element 24 is moved along in the direction of water surface 12. In the shown embodiment pipe 6 is therefore lengthened by about 70 metres. Vessel 2 can then be displaced over the same distance with winch system 30 for the purpose of processing the subsequent pipe element 24.

Pipe section 22 is held in place by clamping system 74, which travels on a so-called skid with a stroke of about one pipe section length, usually about 12 metres. The skid travels on deck 52 and in the embodiment shown in figure 4 has a stroke of about 5 pipe sections. Crane 72 picks up a pipe section 50 from deck 52 and places it in pretreatment section 40. Following pretreatment the pipe section 22 moves to the position for welding of the connection with welding station 18. Prior to this the pipe section 22 is aligned in order to enable a correct connection. The clamping system holding pipe section 22 fast releases this section, and clamping system 74 is moved to the other clamping system 78 and clamps the pipe. Clamping system 78 is released. The whole skid has now been displaced one pipe section length. The pipe remains here at the same position relative to seabed 10. A new pipe section 50 is picked up and connected to pipe 6. As soon as the maximum and/or desired number of pipe sections 22 form part of pipe 6, vessel 2, or the barge, is displaced and a new cycle is started. Winch 76 provides for a fixed connection to seabed 10 and/or land, and thereby largely for a fixation of position of vessel 2 relative to seabed 10.

It is noted for the sake of completeness that combinations of shown parts of pipe-laying system 4 in respectively figures 1-3 and 4 are expressly possible according to the invention.

It is possible to apply pipe-laying system 4 according to the invention in laying ground cables and/or conduits.

## Claims

1. Pipe-laying system (4) for laying a pipe (6) in water (8), the system comprising:
- a supply system (72) for pipe sections (22, 50) to be connected;
- a displaceable frame (16) capable of moving along the pipe sections;
- a clamping system (58) for clamping the supplied pipe sections; and
- a pipe connecting system (18) operatively connected to the displaceable frame for the purpose of connecting more than one pipe section in one processing step,
**characterized in that** the clamping system is capable of travelling on the displaceable frame.

2. Pipe-laying system as claimed in claim 1, wherein more than one pipe section, and preferably between 5 and 10 pipe sections, can be processed simultaneously by the pipe-laying system.

3. Pipe-laying system as claimed in claim 2, wherein the clamping system is embodied such that the pipe sections for connecting can be mutually aligned thereby.

4. Pipe-laying system as claimed in claim 1, 2 or 3, further comprising a winch system (30).

5. Pipe-laying system as claimed in one or more of the foregoing claims, wherein the clamping system is provided with an adjustable clamping mechanism (60).

6. Pipe-laying system as claimed in claim 5, wherein the adjustable clamping mechanism (60) is suitable for clamping pipe sections with a diameter in the range of 60 to 120 cm.

7. Vessel (2) provided with a pipe-laying system (4) as claimed in one or more of the foregoing claims.

8. Method for laying pipes in water, comprising the steps of:
- providing a pipe-laying system and/or vessel provided therewith as claimed in one or more of the foregoing claims;
- picking up a pipe section with a crane (72);
- aligning the pipe section and connecting the pipe section with the pipe connecting system (18);
- releasing a clamping system (74) and moving the clamping system to another clamping system (78) and clamping the pipe;
- releasing the other clamping system (78); and
- displacing the whole displaceable frame one pipe length.

## Patentansprüche

1. Rohrverlegungssystem (4) zum Verlegen eines Rohrs (6) im Wasser (8), wobei das System umfasst:
- ein Zuführsystem (72) für miteinander zu verbindende Rohrabschnitte (22, 50);
- ein versetzbares Gestell (16), das ausgelegt ist, um sich entlang der Rohrabschnitte zu bewegen;
- ein Klemmsystem (58) zum Einspannen der zugeführten Rohrabschnitte; und
- ein Rohmerbindungssystem (18), das mit dem versetzbaren Gestell zum Zwecke eines Verbindens von mehr als einem Rohrabschnitt in einem Verarbeitungsschritt betriebsmäßig verbunden ist,
**dadurch gekennzeichnet, dass** das Klemmsystem ausgelegt ist, sich an dem versetzbaren Gestell zu bewegen.

2. Rohrverlegungssystem gemäß Anspruch 1, bei dem mehr als ein Rohrabschnitt und vorzugsweise zwischen 5 und 10 Rohrabschnitte simultan von dem Rohrverlegungssystem verarbeitet werden können.

3. Rohrverlegungssystem gemäß Anspruch 2, bei dem das Klemmsystem derart eingegliedert ist, dass die Rohrabschnitte dadurch zum Verbinden gegenseitig ausgerichtet werden können.

4. Rohrverlegungssystem gemäß einem der Ansprüche 1, 2 oder 3, weiter umfassend ein Winsch- System (30).

5. Rohrverlegungssystem gemäß einem oder mehreren der vorstehenden Ansprüche, bei dem das Klemmsystem mit einem verstellbaren Klemmmechanismus (60) vorgesehen ist.

6. Rohrverlegungssystem gemäß Anspruch 5, bei dem der verstellbare Klemmmechanismus (60) für ein Einspannen von Rohrabschnitten mit einem Durchmesser in dem Bereich von 60 bis 120 cm ausgelegt ist.

7. Schiff (2), das mit einem Rohrverlegungssystem (4) wie in einem oder mehreren der vorstehenden Ansprüche beansprucht vorgesehen ist.

8. Verfahren zum Verlegen von Rohren in Wasser umfassend die Schritte von:
- Bereitstellen eines Rohrverlegungssystems wie in einem oder mehreren der vorstehenden Ansprüche beansprucht und/oder eines Schiffes, das damit versehen ist;
- Aufnehmen eines Rohrabschnitts mit einem Kran (72);
- Ausrichten des Rohrabschnitts und Verbinden des Rohrabschnitts mit dem Rohrverbindungssystem (18);
- Freigeben eines Klemmsystems (74) und Bewegen des Klemmsystems zu einem anderen Klemmsystem (78) und Einspannen des Rohrs;
- Freigeben des anderen Klemmsystems (78); und
- Versetzen des gesamten versetzbaren Gestells um eine Rohrlänge.

## Revendications

1. Système de pose de canalisation (4) destiné à poser une canalisation (6) dans l'eau (8), le système comprenant :
- un système de fourniture (72) de sections de canalisation (22, 50) à connecter ;
- un bâti qui peut être déplacé (16), capable de se déplacer le long des sections de canalisation ;
- un système de serrage (58) destiné à serrer les sections de canalisation fournies ; et
- un système de connexion de canalisation (18) connecté de manière opérationnelle au bâti qui peut être déplacé de façon à connecter plusieurs sections de canalisation en une seule étape de traitement, **caractérisé en ce que** le système de serrage est capable de se déplacer sur le bâti qui peut être déplacé.

2. Système de pose de canalisation selon la revendication 1, dans lequel plusieurs sections de canalisation, et de préférence entre 5 et 10 sections de canalisation, peuvent être traitées de manière simultanée par le système de pose de canalisation.

3. Système de pose de canalisation selon la revendication 2, dans lequel le système de serrage est incorporé de telle sorte que les sections de canalisation à connecter puissent être alignées de ce fait de manière mutuelle.

4. Système de pose de canalisation selon l'une quelconque des revendications 1 à 3, comprenant en outre un système de treuil (30).

5. Système de pose de canalisation selon l'une quelconque des revendications précédentes, dans lequel le système de serrage est doté d'un mécanisme de serrage qui peut être réglé (60).

6. Système de pose de canalisation selon la revendication 5, dans lequel le mécanisme de serrage qui peut être réglé (60) convient au serrage de sections de canalisation qui présentent un diamètre qui se situe dans une plage comprise entre 60 cm et 120 cm.

7. Navire (2) doté d'un système de pose de canalisation (4) selon l'une quelconque des revendications précédentes.

8. Procédé destiné à poser des canalisations dans l'eau, comprenant les étapes consistant à :
- fournir un système de pose de canalisation et / ou un navire doté de celui-ci, selon l'une quelconque des revendications précédentes ;
- saisir une section de canalisation à l'aide d'une grue (72) ;
- aligner la section de canalisation et connecter la section de canalisation au système de connexion de canalisation (18) ;
- libérer un système de serrage (74) et déplacer le système de serrage vers un autre système de serrage (78) et serrer la canalisation ;
- libérer l'autre système de serrage (78) ; et
- déplacer tout le bâti qui peut être déplacé d'une longueur de canalisation.
